Europäisches Patentamt

European Patent Office

Office européen des brevets

⑱

(11) Publication number: **0 153 793**
**B1**

(12) **EUROPEAN PATENT SPECIFICATION**

(45) Date of publication of patent specification: **03.01.90**

(21) Application number: **85300066.9**

(22) Date of filing: **04.01.85**

(51) Int. Cl.⁵: **G 11 B 5/60**

(54) Loading/unloading means for slider devices.

(30) Priority: **23.01.84 US 572740**

(43) Date of publication of application:
**04.09.85 Bulletin 85/36**

(45) Publication of the grant of the patent:
**03.01.90 Bulletin 90/01**

(84) Designated Contracting States:
**BE DE FR GB NL SE**

(56) References cited:
**GB-A- 984 549**
**GB-A- 989 692**
**GB-A-1 121 404**
**US-A-3 018 152**
**US-A-3 678 480**
**US-A-3 696 351**
**US-A-3 855 622**
**US-A-3 864 749**
**US-A-4 131 924**
**US-A-4 141 049**

(73) Proprietor: **UNISYS CORPORATION**
**1, Burroughs Place**
**Detroit Michigan 48232 (US)**

(72) Inventor: **Verdone,, Michael A.**
**20 Shady Lane**
**Hillsbourough California 94010 (US)**

(74) Representative: **Kirby, Harold Douglas Benson et al**
**G.F. Redfern & Company Marlborough Lodge 14 Farncombe Road**
**Worthing West Sussex BN11 2BT (GB)**

Courier Press, Leamington Spa, England.

## Description

This invention relates to means for making high speed magnetic recording transducers and more particularly to such means as adapted for supporting air bearing sliders.

Background, Features:

Workers in the art of designing, making and using high-speed, precision magnetic recording equipment are well aware of the need for continual improvement in the mounting of the tiny, delicate, precisely-dimensioned "sliders" (read/write transducers of the "air bearing" type) commonly used today with high speed data processing equipment.

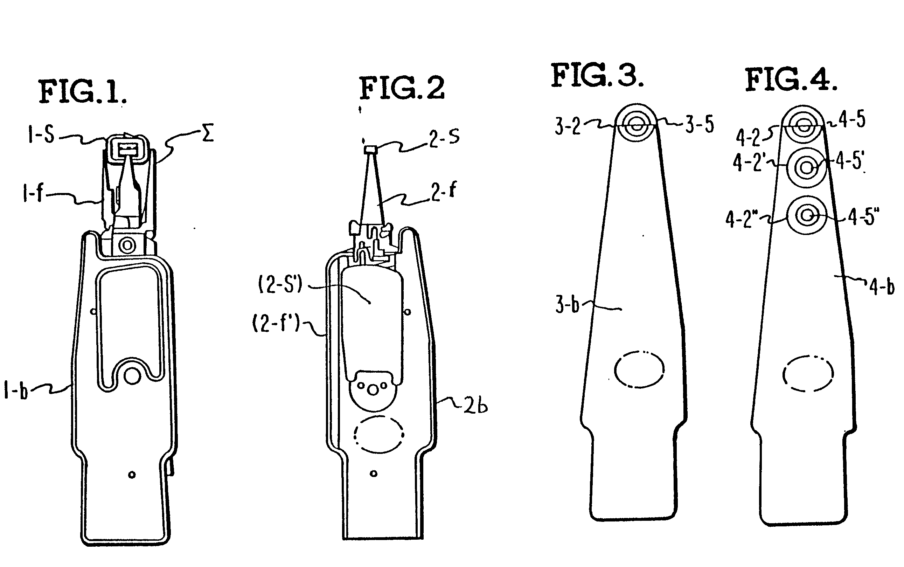

For instance, Fig. 1 shows (plan view) a relatively conventional mounting arrangement for an air bearing slider 1-S (Winchester type, as commonly known in the art) supported on a mounting gimbal flexure 1-f which in turn is cantilevered-out at a precise orientation from a relatively rigid mounting (load beam 1-b; in many instances, a second such array is also included—cf. slider 1-S' on flexure 1-f' in phantom—also see related mounting arrangements in U.S. 4,286,297 to Root et al. and in U.S. 4,268,879 to Watrous).

For instance, workers are familiar with random access disk drive (memory) arrangements with "Winchester" sliders that conventionally overfly a disk surface at flying heights of 1 to 2.54 μm (40 to 100 microinches); or the lightweight, low mass "mini-Winchester" sliders which fly as close as 0.356 to 0.635 μm (14 to 25 microinches).

Fig. 2 shows a related design for mounting a slider 2-S (understood as the "self-loading" type here—e.g., see U.S. 3,855,625) on a different flexure spring 2-f projected from a relatively rigid mounting beam 2-b as workers in the art will understand (with a second like slider 2-S' on flexure 2-f' also commonly included as depicted in phantom). The present invention is directed toward teaching improved slider mounting arrangements useful as alternatives to such conventional arrays, and particularly for eliminating the need for flexure springs—these being rather bulky, fussy, and rather imprecise and inefficient.

Slider mounting arrays such as those shown in Fig. 1 (and mentioned in the cited patents) are commonly arranged to "overfly" the recording surface on a magnetic disk, when the disk is spun-up to a prescribed surface velocity. The "air-bearing face" of such sliders is normally contemplated as resting on a "landing zone" portion of such a disk surface when the disk is at rest; "taking off" to overfly the disk as it is spun-up. The present invention is devoted toward minimizing or eliminating the role of such mounting flexures and of the associated landing/takeoff zones on magnetic disk records.

Workers recognize that the information on such disks must usually be retrieved just as quickly as possible without any damage to the storage media. Workers understand that, to obtain the necessary high bit densities with useful recording/readback characteristics, a slider must fly very, very close to the disk surface—sometimes as close as a few microinches. Consequently, the air bearing face of the slider must be uncommonly smooth, as must the surface of the disk—e.g., to a point where the two surfaces can "wring" together (stick when merely resting against one another). Workers recognize that such an uncommonly high degree of smoothness (to within two microinches or less) means that essentially all surface anomalies ("asperities" or nodules), however miniscule, must be eliminated to facilitate a level over-flight (e.g., a very tiny nodule like a speck of dust can induce a good deal of "rebound" of the slider overflying the passing disk surface, leading to read-write problems). My invention can reduce such "rebound", reduce the incidence of "debris" and eliminate such "wringing" of slider and medium.

Also, workers would love to eliminate landing/takeoff of a slider—not only to save recording space (eliminate landing/takeoff zones), but also to eliminate the slider-disk abrasion and resulting debris and avoid the "drag" that slider-disk contact imposes on the disk rotation system. The need for aerodynamic takeoff/landing surfaces is also eliminated since one dispenses with landing and takeoff maneuvers.

The subject invention is directed towards fulfilling these goals and others, as discussed below.

Workers recognize that if takeoff-landing ("loading-unloading") zones did not have to be provided on a disk surface, the disk's storage capacity would be greatly enhanced. Further, there is the mentioned problem of "debris" generated by slider-disk contact (during landing and takeoff). This debris will obviously contaminate the environment in a disk file and may eventually lead to disastrous problems, such as "head-crash", as worker well realize. Also, the slider-disk friction has led to unnecessarily larger (oversized) spindle motors with their attendant excess costs, space-consumption, and heat generation, etc.—contrary to the present trend toward miniaturizing and simplifying disk drives.

The present invention proposes improved slider mounting arrangements whereby the head can be loaded and unloaded more precisely, more gently, and without necessarily involving slider-disk contact while the disk is rotating. Thus, one can avoid the need for takeoff-landing zones on the disk and avoid practically all head-disk contact, reducing the likelihood of debris (contamination), head-crash, and the like.

—"Bellows-mounted" slider:

In one form, the invention involves a low mass diaphragm (bellows) on which a slider may be attached, thus eliminating flexure spring mounts. Fig. 3 shows an example in schematic plan view wherein a slider 3-S is mounted on the exposed surface of a bellows 3-L which, in turn, is mounted directly on a relatively conventional rigid beam 3-b (details below). Such a "diaphragm-mounting" can be controlled to "load" a slider operatively adjacent an associated passing disk surface to "fly" there relatively easily, simply and conveniently by activating a bellows-expanding pneumatic means as known in the art (and discussed below). The common flexure mount may thus be eliminated.

An associated problem with such conventional sliders is that of "transitional stability", in that being mounted on the mentioned "gimbal flexure", the unit characteristically undergoes a period of instability (tendency to climb steeply away from the disk, then dive back down unpredictably) during every takeoff and landing— usually at some characteristic disk-rpm. Present disk drives try to minimize this, and make the period as brief as possible, by hyper-accelerating/ decelerating the disk during startup or slowdown—unfortunately, this involves providing an oversized, high-torque spindle motor which otherwise would be unnecessary. The present invention avoids this problem entirely by eliminating such flexure mountings, as well as eliminating the takeoff and landing maneuvers.

Another common goal now is to minimize mount size, reducing the space required for head mounting as much as possible. This allows one to locate sliders closer together (on a common arm, with an associated improvement in access times). Of course, one way to do this is to replace the relatively massive load beam with a mount according to the present invention. Thus, the invention can allow one to mount sliders closer together—e.g., with a number of bellows-mounted heads carried on a single support beam as in Fig. 4 (see slider 4-S on bellows 4-L, and sliders 4-S', 4-s'', likewise bellows-mounted on beam 4-b).

An associated advantage with the subject of the invention and the attenuation of load beam length is the reduction in mass of the slider supports (e.g., using a tiny, light diaphragm mount). This leads to an associated decrease in the tendency of the assembly to "resonate" (lower mass means higher natural resonant frequency—e.g., one common head-arm assembly design resonates at about 1770 Hz—by contrast, a related design modified according to the invention resonates at about 4000 Hz).

Thus, as one feature hereof, a flying slider is mounted on its rigid supporting load beam via a fluid-controlled mount through which it may be hydraulically urged, under close control, toward and away from its reference passing disk surface for transducer operations therewith—e.g., being urged close enough so the slider is made to "fly" above the disk without need for "takeoff" procedures.

US—A—3 678 480 discloses a pneumatic actuating device for a magnetic recording head. Pneumatic pressure acts on a diaphragm to which a rigid disk is attached and the disk acts on one end of a pin, the other end of which actuates the recording head which is mounted on a conventional spring support.

US—A—3 696 351 discloses a recording head mounting arrangement in which each head is mounted on a conventional gimbal spring inside the housing. A pneumatic actuator is provided for advancing and retracting the head.

The present invention relates to an arrangement for mounting a recording transducer on a longitudinally extending rigid arm disposed parallel to the recording surface of a rotatable disc, said arm having a chamber connected to a controllable source of fluid under pressure, and said transducer being secured to a diaphragm.

The invention is characterised in that said diaphragm seals an opening in said chamber so that variations in said fluid pressure act on said diaphragm to move the part of said diaphragm to which said transducer is secured transversely with respect to said rigid arm towards and away from said recording surface.

Brief description of the drawings:

These and other features and advantages of the present invention will be appreciated by workers as they become better understood by reference to the following detailed description of the present preferred embodiments which should be considered in conjunction with the accompanying drawings, wherein like reference symbols denote like elements:

Figs. 1 and 2 depict, in plan view, a Winchester slider mounting and a self-loading slider mounting, respectively, these being apt for modification with the invention;

Fig. 3 depicts, in like plan view, an "on-bellows" slider mounting embodiment, with a plurality thereof in like Fig. 4; and

Fig. 5 shows, in schematic, simplified side view, a "bellows-mounting" embodiment, with Fig. 6 showing an associated preferred slider shaping configuration in plan view.

Figs. 3, 4, 5 and 6 indicate, in sectional schematic fashion, an embodiment of the invention with a "diaphragm" type mount. Thus, here a pair of conventional, precisely-rotatable magnetic recording disks $D_a$, $D_b$ are shown with respective facing recording surfaces contemplated for operative disposition with a pair of opposed "Winchester" air-bearing sliders SL-a, SL-b, these to be selectively "loaded" and "unloaded" with a respective disk surface by a common diaphragm mounting arrangement 10-A.

Here, a relatively rigid mounting arm tb (no load beam—cf. Figs. 3, 4) will be understood as arranged generally as in Figs. 1 and 2, being provided with an enlarged mounting portion tB-E at its distal end. Portion tB-E is centrally relieved (bore B) as indicated in Fig. 10-A and communicates with a central bore, or air conduit tB-ac through bore tB. Bore tB-ac will be understood as in pneumatic communication with a selectively operable souce of pressurized gas, via associated conduit means. On the opposing upper and lower faces of tip tB-E are mounted a pair of identical tiny, light diaphragms BL-a, BL-b, of the bellows type (e.g., preferably like those used in a microphone). These serve to close end-bore B, being sealed thereto in air-tight relation by any suitable seal (e.g., a swaged, or rolled-over, or epoxy seal TS). Each bellows-diaphragm will be understood as including a prescribed number of concentric "flutes", terminating at the center with a raised center portion, or "knob" ("load point") on which the respective slider is affixed (see knob BL-ac on which slider SL-a is attached and BL-bc on which slider SL-b is attached).

The construction of these bellows disks is obviously critical, being understood by workers as arranged to respond, under indicated pressure-pulses, to symmetrically and opposingly thrust their respective slider into, and out of, "loaded" condition uniformly toward, and away from, a respective disk surface. The excursion will be just sufficient to place the air-bearing-surface of each slider into conventional operative relation (flying relation) with the rotating surface, as workers in the art will understand. It will be understood that the bellows walls will be of a prescribed uniform thickness as adapted for such operation (resilience varies as the third power of thickness). For instance, with a desired "engagement-excursion" on the order of 0.13 mm (5 mils) under a pneumatic drive of about 0.14 $Kp/cm^2$ (2 psi) (above ambient), it has been found that a bellows-diaphragm of the type illustrated and about 0.03 to 0.02 mm (1 to 0.8 mils) thick (or less) worked quite well (this is, about one-quarter the thickness of a piece of writing paper). This can be a "microphone type" diaphragm constructed by known plating processes to yield the desired thickness and shape, as workers in the art will understand.

Workers will recognize that other diaphragm material may be substituted in certain cases (e.g., plastic in some cases)

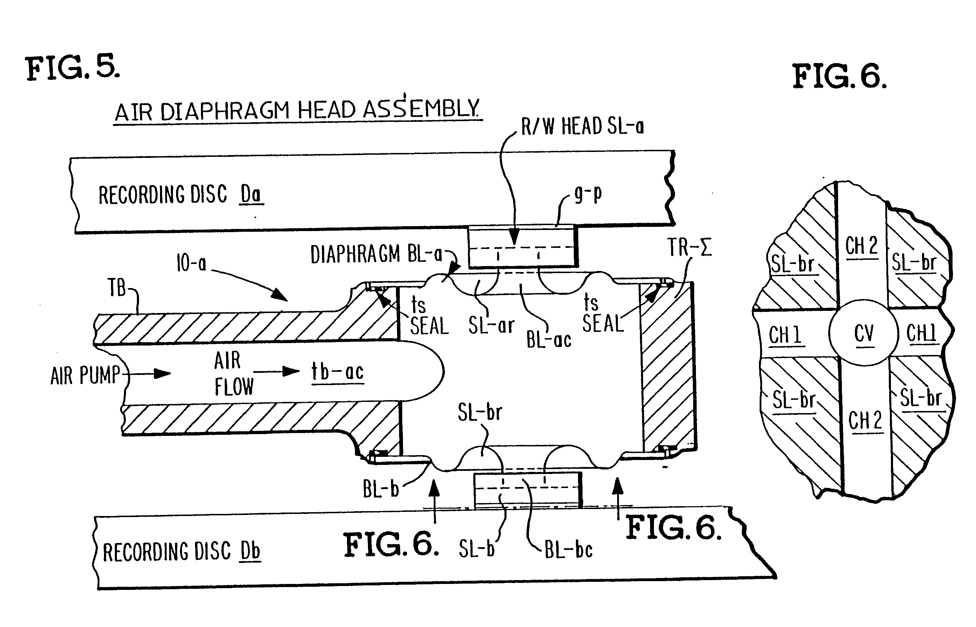

In many cases it will be found convenient to "cross-groove" the "backside" of the slider as indicated in Fig. 6 (plan view of slider SL-b), to facilitate the positioning and attachment of the bellows knob ("load point"). Thus, in Fig. 6 it will be understood that a pair of identical channels ch-1, ch-2 about 1.016 mm (0.04 inches) wide and 0.05 mm (0.002 inches) deep, are cut in the backside of each slider SL, in the center thereof and transverse to one another, to leave a central "cross-groove" circular cavity CV adapted for engagement with the bellows knob. One may seal (couple) the knob to the slider with epoxy or other known means (e.g., laser-weld if slider surface is nickel or the like).

The diaphragm (slider suspension) will be recognized as "per se flexible" (e.g., its own return-spring) and of very low mass (e.g., safe, high-frequency resonance). Of course, such diaphragms may be easily actuated and closely controlled over a fairly precise excursion.

For example, with a Winchester slider affixed upon a bellows-diaphragm like BL-a, BL-b (on center-knob thereof), one will be understood to gradually increase the air-pressure (under BL-a, BL-b) to gently produce a positive force to "load" the slider adjacent the disk, and maintain such a force during the read/write process. The diaphragm can apply loads of different magnitudes so as to maintain a relatively constant head/disk spacing over the entire range from the inner to the outer·tracks. Controlled "unloading" can result from merely reducing the air pressure, as workers will appreciate (e.g., the up-thrust, distended bellows-diaphragm will help act as its own return-spring, once positive air pressure is reduced).

Conversely, the diaphragm may be pre-biased to normally "load" the slider (urge it to "transduce position") except when overridden by the associated fluid drive (cf. negative pressure normally held "ON" to keep slider "unloaded"—but released when "loading" desired; i.e., more positive pressure, or less vacuum, while slider is to be loaded). Then, for "unloading", the fluid drive return-force is reimposed.

In the case of a "self-load" slider, one need only apply positive air-pressure for the onset of "loading". That is, once the "self-loading" slider is brought operatively adjacent the rotating disk surface, its own aerodynamically-developed air-bearing pressures will hold it "loaded" indefinitely and the positive air-pressure need not be maintained. "Unloading" is also simpler and "slider-assisted" (as well as bellows-assisted) —one need only allow disk rpm to fall off and "self-unloading" will take over, assisted to a greater or lesser extent by the inherent return-spring bias of the bellows diaphragm ("on-loading" air pressure having been released already). In certain instances, one may even arrange the diaphragm to be pre-biased negatively to assist in spring-return of the slider (once the countervailing on-load pressure is released, and the reduced disk rpm decreases "self-load" forces enough to allow this). Workers will applaud this improvement—e.g., as opposed to more conventional designs where the load-beam must be pre-biased toward the disk (with resultant slider-disk contact, takeoff and landing abrasion, etc., which are all better avoided).

—Results

Workers will recognize how the subject invention can eliminate the usual space-consuming load beam (e.g., 1-f, 1-f', in Fig. 1 or 2-f, 2-f' in Fig. 2); e.g., by mounting a bellows support (for slider) directly on a carrier arm—as for bellows 3-L in Fig. 3 (on arm 3-b, supporting slider 3-S) or the several such bellows 4-L, 4-L', 4-L'' on arm 4-b in Fig. 4) (carrying respective sliders 4-S, 4-S', 4-S''). Evidently, the space heretofore required for load beams may now be used for multiple, more compact head mounts—with related improvements in access time and data transfer (both faster).

—Flexible media transducers:

Workers will recognize how one can modify the diaphragm arrangement to mount a R/W head for flexible media, especially a self-load slider, or one that is adapted to be held rigid and overflow by the passing floppy disk.

Workers will appreciate that such "diaphragm" transducer mountings provide an arrangement adapted to translate a transducer (e.g., such sliders) toward and away from a medium without need for "load beams" or any like flexible arm, also dispensing with the need to move (pivot) such load beams—e.g., resorting instead to "fluid drive" means (pressurized gas) that need only move the relatively tiny diaphragm "platform" carrying the slider.

Such a platform can be used to "load" a Winchester type slider—and to selectively "unload" it; vs the conventional load-beam-flexure which must be translated to position the slider to "fly" above the medium, then repositioned to unload (or else the slider must be constantly thrust against the medium, and caused to "take-off" and "land" as the medium is translated faster and slower).

Similarly, such a platform can be used with a "self-loading" type slider, without need for the usual load-beam-flexure.

Further modifications of the invention are also possible. For example, the means disclosed herein are also applicable to other disk memory systems and related head-mountings, as well as to flexible media. Also, the present invention is applicable for providing the positioning required in other forms of recording and/or reproducing systems, such as those in which data is recorded and reproduced optically.

## Claims

1. An arrangement for mounting a recording transducer (SL-a, SL-b) on a longitudinally extending rigid arm (3-b, 4-b, TB) disposed parallel to the recording surface of a rotatable disk (Da, Db) said arm having a chamber connected (via tb-ac) to a controllable source of fluid under pressure (AIR PUMP), and said transducer being secured to a diaphragm (BL-a, BL-b), characterised in that said diaphragm seals an opening in said chamber so that variations in said fluid pressure act on said diaphragm to move the part of said diaphragm to which said transducer is secured transversely with respect to said rigid arm towards and away from said recording surface.

2. An arrangement according to Claim 1, characterised in that said fluid is air.

3. An arrangement according to Claim 1 or Claim 2, characterised in that said chamber is sealed by two diaphragms movable by said fluid pressure in opposite directions with respect to said rigid arm, each of said members having a respective transducer secured thereto.

4. An arrangement according to any of the preceding claims, characterised in that said rigid arm has an axial passage (tb-ac) conveying said fluid to said chamber.

## Patentansprüche

1. Eine Anordung zur Befestigung eines Aufnahmewandlers (SL-a, SL-b) auf einem sich in Längsrichtung erstreckenden, starren Arm (3-b, 4-b, TB), der parallel zur aufnehmenden Oberfläche einer drehbaren Scheibe (Da, Db) angeordnet ist, wobei der Arm eine Kammer besitzt, die (über tb-ac) mit einer steuerbaren Quelle von unter Druck stenendem Fluid (AIR PUMP) verbunden ist, und der Wandler an einer Membran (BL-a, BL-b) befestigt ist, dadurch gekennzeichnet, daß die Membran eine Öffnung in der Kammer verschließt, so daß Veränderungen im Fluiddruck auf die Membran wirken, um den Teil der Membran, an dem der Wandler befestigt ist, quer zum starren Arm in Richtung auf die aufnehmende Oberfläche hin und von dieser weg zu bewegen.

2. Eine Anordnung nach Anspruch 1, dadurch gekennzeichnet, daß das Fluid Luft ist.

3. Eine Anordung nach Anspruch 1 oder Anspruch 2, dadurch gekennzeichnet, daß die Kammer von zwei Membranen verschlossen ist, die durch den Fluiddruck in entgegengesetzte Richtungen bezüglich des starren Arms bewegbar sind, wobei jeder der Membranen einen daran befestigten entsprechenden Wandler besitzt.

4. Eine Anordnung nach einem der vorangegangenen Ansprüche, dadurch gekennzeichnet, daß der starre Arm einen axialen Kanal (tb-ac) besitzt, der das Fluid zur Kammer leitet.

## Revendications

1. Montage d'un transducteur d'enregistrement (SL-a, SL-b) sur un bras rigide longitudinal (3-b, 4-b, TB) parallèle à la surface d'enregistrement d'un disque rotatif (Da, Db), ce bras ayant une chambre reliée (par l'intermédiaire de tb-ac) à une source commandée de fluide sous pression (POMPE A AIR), ce transducteur étant fixé à un diaphragme (BL-a, BL-b), montage caractérisé en ce que le diaphragme ferme de manière étanche un ouverture de la chambre pour que les variations de la pression du fluide agissent sur le diaphragme et déplacent la partie du diaphragme portant le transducteur, transversalement par rapport au bras rigide vers la surface d'enregistrement (dans le sens du rapprochement et de l'écartement).

2. Montage selon la revendication 1, caractérisé en ce que le fluide est de l'air.

3. Montage selon la revendication 1 ou à la revendication 2, caractérisé en ce que la chambre est scellée par deux diaphragmes mobiles sous l'action de la pression du fluide, dans des directions opposées par rapport au bras rigide, chacun des éléments portant un transducteur respectif.

4. Montage selon l'une quelconque des revendications précédentes, caractérisé en ce que le bras rigide est muni d'un passage axial (tb-ac) qui transfère le fluide vers la chambre.

# FIG.1.

1-S

Σ

1-f

1-b

# FIG.2

2-S

2-f

(2-S')

(2-f')

2b

# FIG.3.

3-2

3-5

3-b

# FIG.4.

4-2

4-5

4-2'

4-5'

4-2"

4-5"

4-b

EP 0 153 793 B1

# FIG. 5.

## AIR DIAPHRAGM HEAD ASSEMBLY

R/W HEAD SL-a

RECORDING DISC _Da_

g-p

DIAPHRAGM BL-a

10-a

TR-Σ

TB

ts SEAL

SL-ar

BL-ac

ts SEAL

AIR PUMP

AIR FLOW → _tb-ac_

SL-br

BL-b

RECORDING DISC _Db_

**FIG. 6.** SL-b

BL-bc

**FIG. 6.**

# FIG. 6.

SL-br

CH 2

SL-br

CH 1

CV

CH 1

SL-br

CH 2

SL-br

EP 0 153 793 B1